Europäisches Patentamt

European Patent Office

Office européen des brevets

(11) Publication number: 0 351 584
A1

# EUROPEAN PATENT APPLICATION

(21) Application number: 89111469.6

(22) Date of filing: 23.06.89

(51) Int. Cl.⁴: B01D 69/08 , B01D 71/36 , D01D 5/24

(30) Priority: 24.06.88 JP 157660/88

(43) Date of publication of application:
24.01.90 Bulletin 90/04

(84) Designated Contracting States:
DE FR GB

(71) Applicant: DAIKIN INDUSTRIES, LIMITED
Umeda Center Building 4-12, Nakazaki-nishi
2-chome Kita-ku
Osaka-shi Osaka-fu(JP)

(72) Inventor: Ishiwari, Kazuo
12-407, Hozumidai
Ibaraki-shi Osaka-fu(JP)
Inventor: Sakakura, Atsushi
148-23, Manjojiki-cho Ohkamedani Fukakusa
Fushimi-ku Kyoto-shi Kyoto-fu(JP)

(74) Representative: Hansen, Bernd, Dr.rer.nat. et
al
Hoffmann, Eitle & Partner Patentanwälte
Arabellastrasse 4 Postfach 81 04 20
D-8000 München 81(DE)

(54) Porous polytetrafluoroethylene hollow yarn and preparation thereof.

(57) A novel porous polytetrafluoroethylene hollow yarn having a thin wall thickness and large porosity is obtainable by heating an unsintered hollow yarn, which is produced by paste extruding polytetrafluoroethylene powder, at a temperature lower than the melting point of said polytetrafluoroethylene powder and higher than the melting point of the hollow yarn at which an endothermic peak on a higher temperature side in a crystalline melting thermograph measured with a differential scanning calorimeter does not disappear and a specific gravity of the hollow yarn is increased to 2.0 or larger and drawing the heated yarn at a temperature lower than the polytetrafluoroethylene powder.

EP 0 351 584 A1

## POROUS POLYTETRAFLUOROETHYLENE HOLLOW YARN AND PREPARATION THEREOF

### BACKGROUND OF THE INVENTION

Field of the Invention

The present invention relates to a porous polytetrafluoroethylene (hereinafter referred to as "PTFE") hollow yarn and a process for producing the same.

Description of the Related Art

Porous PTFE hollow yarns are used as filters and supports for separation membranes by utilizing heat resistance, chemical resistance and water- and oil- repellency of PTFE. Hitherto, various processes for producing the porous PTFE hollow yarns have been proposed. However, the conventional processes provides only hollow cylindrical members having a thick wall, which are not yarns but rather tubes.

For example, Japanese Patent Publication No. 18991/1976 discloses a process for producing a porous PTFE hollow cylindrical member which comprises drying a PTFE paste extruded hollow cylindrical member to remove a liquid lubricant and drawing the member at a temperature lower than the melting point of PTFE. This publication proposes the use of modified PTFE having good paste extrudability. However, since the modified PTFE has poor drawability, the extruded material should be drawn at a high rate at high temperature. Further, the produced hollow cylindrical mem ber tends to be clogged, and has a larger inner diameter and a large wall thickness.

Japanese Patent Publication No. 42794/1978 discloses a process for producing a porous PTFE hollow cylindrical member which comprises heating a sintered PTFE paste extruded member at a temperature not lower than 327°C and drawing the member to obtain a tube. In this process, the sintered member should be annealed, and the produced tube has a small porosity and a large wall thickness such as 0.6 mm.

As explained above, since the conventional porous PFTE hollow yarns or tubes have various drawbacks, they cannot be practically used as filters.

### SUMMARY OF THE THE INVENTION

One object of the present invention is to provide a novel porous PFTE hollow yarn having a thin wall, a small inner diameter and a large gas permeability, which yarn can be used as a filter.

Another object of the present invention is to provide a process for producing said novel porous PTFE hollow yarn.

According to the present invention, there is provided a porous PTFE hollow yarn which is obtainable by heating an unsintered hollow yarn, which is produced by paste extruding PTFE powder, at a temperature lower than the melting point of said PFTE powder and higher than the melting point of the hollow yarn at which, an endothermic peak on a higher temperature side in a crystalline melting thermograph measured with a differential scanning calorimeter does not disappear and a specific gravity of the hollow yarn is increased to 2.0 or larger and drawing the heated yarn at a temperature lower than the PTFE powder.

### BRIEF DESCRIPTION OF THE DRAWINGS

Fig. 1 shows a hollow yarn,

Fig. 2 is the DSC chart of the PTFE powder used in Example 1,

Fig. 3 is the DSC chart of the hollow fiber obtained by heating the unsintered yarn at 335°C for 10 minutes, and

Fig. 4 is the DSC chart of the PTFE powder of Fig. 2 after heating at 360°C for 30 minutes.

### DETAILED DESCRIPTION OF THE DRAWINGS

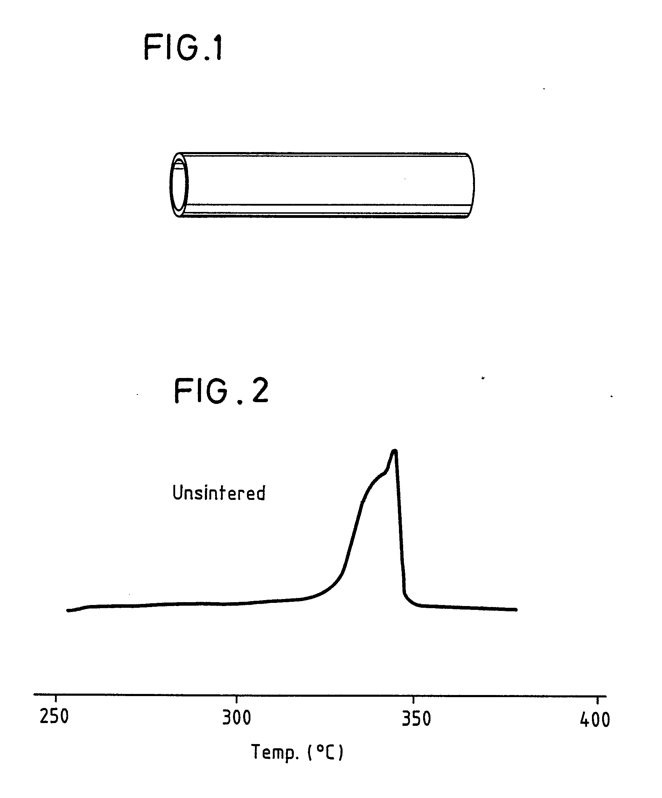

In the present patent, the porous PTFE hollow yarn is intended to mean a yarn a wall of which is made

2

of porous PTFE and has a thickness of 0.2 mm or less. The hollow yarn means a yarn having a bore along the axis of the yarn as shown in Fig. 1.

PTFE powder includes not only powder of polytetrafluoroethylene but also modified PTFE powder of copolymers of tetrafluoroethylene with 2 % by weight or less of at least one copolymerizable comonomer such as hexafluoropropylene, chlorotrifluoroethylene, fluoroalkyl vinyl ether and the like. Among them, the modified PTFE powder is preferred since it has good moldability.

The process for producing the porous PTFE hollow yarn comprises steps of heating the unsintered PTFE hollow yarn under a specific temperature condition and drawing the heated PTFE hollow yarn. The most important characteristics of the present invention resides in the heating step.

The PTFE powder has an endothermic peak around 347°C, usually 347±2°C in the crystalline melting thermograph measured with the differential scanning calorimeter (DSC). Herein, the temperature at which said endothermic peak appears is defined as the melting point of the PTFE powder. Fig. 2 shows the DSC chart of the PTFE powder used in Example 1.

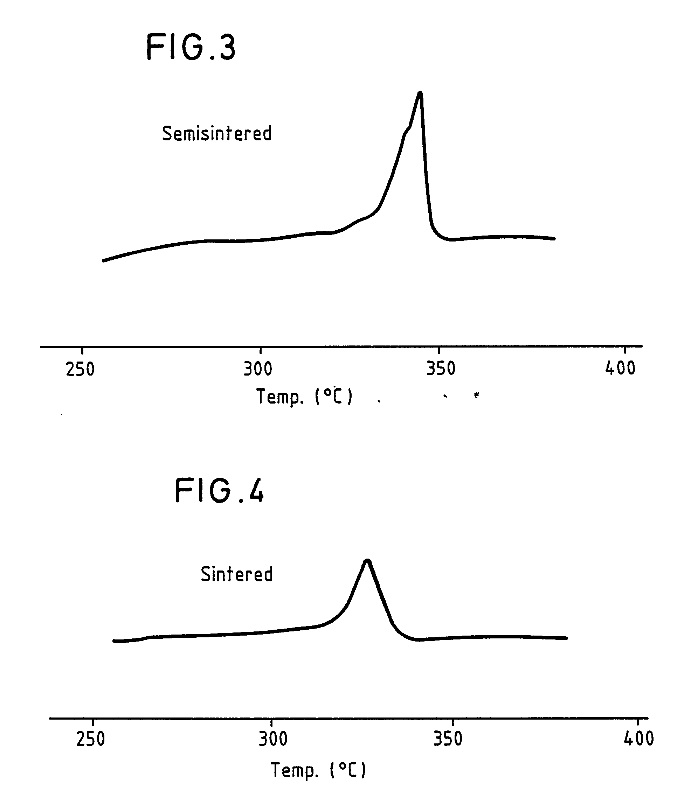

When the PTFE powder is heated at a temperature higher than the peak temperature in Fig. 2 to mold the PTFE powder as usual, the endothermic peak at 347°C disappears and a comparatively weak endothermic peak newly appears around 327°C. Fig. 4 shows the DSC chart of the PTFE powder of Fig. 2 after heating at 360°C for 30 minutes. The peak around 327°C is clearly seen. Herein, the temperature at which such new endothermic peak appears after heating is defined as the melting point of the hollow yarn.

Fig. 3 is the DSC chart of the hollow fiber obtained by heating the unsintered yarn at 335°C for 10 minutes. In Fig. 3, the sharp peak around 347°C of Fig. 2 does not disappear. The DSC chart of Fig. 3 is obtained by the heating step according to the present invention. The heating step of the present invention includes not only a case where the shoulder on a lower temperature side disappears but also a case where the shoulder on the lower temperature side shrinks. The change of shoulder shape can be easily found by comparing the DSC charts before and after heating.

In the present invention, the unsintered hollow yarn is preferably heated in the temperature range of from 330 to 340°C. But, this range is not critical. For example, if the unsintered yarn is heated at a temperature higher than the melting point of the PTFE powder, a very short heating time can achieve the same effect. At 360°C, 20 to 30 seconds heating is acceptable but 30 minutes heating is too long in the present invention.

The hollow yarn heated under the above conditions according to the present invention may be referred to as "semisintered" product.

Then, the semisintered PTFE hollow yarn is drawn. Preferably, the drawing temperature is from 25 to 300°C, the drawing rate is from 10 to 1,000 %/sec., and the drawing ratio is from 200 to 1,000 %. By drawing, the wall of the hollow fiber is made porous.

After drawing, the hollow yarn may be annealed to improve the strength, particularly the internal pressure strength. In the post heat treatment, a temperature is usually from 300 to 370°C, preferably from 330 to 350°C, and heating time is from 1 to 30 minutes.

Preferably, the porous PTFE hollow fiber of the present invention has a wall thickness of not larger than 0.2 mm, tensile strength of 500 kg/cm² or larger, porosity of 30 % or larger, the maximum pore size of 1.0 μm or less and gas (nitrogen gas) permeability of I x 10⁻⁵ ml.cm/cm².sec.cmHg or larger.

As described above, the porous PTFE hollow yarn has a thin wall thickness, a small pore size, large porosity, large gas permeability and high strength. Particularly, the gas permeability is large, although the pore size is small. In addition, the cross section across the axis is substantially round.

During the production, the porous PTFE hollow yarn is hardly clogged because the yarn is thermally set before drawing. The drawing can be carried out under various conditions, for example a wide temperature range from room temperature to high temperature and at a wide drawing rate. Further, extrusion of the PTFE powder, heating of the extruded hollow yarn, drawing and winding can be continuously carried out.

## PREFERRED EMBODIMENTS OF THE INVENTION

The present invention will be illustrated by following Examples, in which "parts" and "%" are by weight unless otherwise indicated.

Example 1

A mixture of modified PTFE fine powder consisting of 99.75 % of tetrafluoroethylene and 0.25 % of chlorotrifluoroethylene (F-210, a trade name of Daikin Industries Ltd.) (100 parts) and, as an extrusion aid, a hydrocarbon oil (Isoper E manufactured by Esso Oil) (23 parts) was paste extruded with an extruder having a nozzle diameter ratio of 1.32 mm/1.085 mm to produce an unsintered PTFE hollow yarn having a wall thickness of 0.12 mm.

Then, the unsintered yarn was semisintered by heating it at 335° C for 10 minutes.

The semisintered hollow yarn was drawn uniaxially along the yarn axis at 25° C at a drawing rate of 17 %/sec. with a drawing ratio of 400 % to obtain a porous PTFE hollow yarn, the sizes and characteristics of which are shown in Table 2.

The characteristics of the hollow yarn were determined as follows:

### 1. Maximum pore diameter

According to the procedures of ASTM F361-86, by using methanol, the maximum pore diameter is measured.

### 2. Porosity

The porosity is calculated according to the following equation:

$$\text{Porosity (\%)} = \frac{\text{True density} - \text{Apparent density}}{\text{True density}} \times 100$$

### 3. Gas permeability

By using nitrogen gas, the gas permeability is measured under the pressure of 1 kg/cm$^2$.

### 4. Tensile strength

By using DCS-500 of Shimadzu Manufacturing, the tensile strength is measured at a chuck distance of 10 mm and a pulling rate of 100 mm/min. at 25° C.

### 5. Internal pressure strength

The interior space of the hollow yarn is pressurized with nitrogen gas and the pressure at which the yarn is burst is recorded as internal pressure strength.

The DSC charts of the modified PTFE fine powder and the semisintered PTFE hollow yarn are shown in Figs. 2 and 3, respectively. The DSC charts are recorded by heating 10 mg of the sample at a heating rate of 10° C/min.

### Examples 2 and 3

In the same manner as in Example 1 but drawing the semisintered yarn under the conditions in Table 1, a porous PTFE hollow yarn was produced. The sizes and characteristics of the obtained hollow yarn are shown in Table 2.

### Example 4

In the same manner as in Example 3 but using modified PTFE fine powder consisting of 99.83 % of

4

tetrafluoroethylene, 0.14 % of chlorotrifluoroethylene and 0.03 % of fluoroalkyl vinyl ether (F-203, a trade name of Daikin Industries Ltd.), a porous PTFE hollow yarn was produced. The sizes and characteristics of the hollow yarn are shown in Table 2.

Examples 5 to 8

In the same manner as in Example 1 but post-heating the drawn PTFE hollow fiber at a post-heating temperature shown in Table 1, a porous PTFE hollow yarn was produced. The sizes and characteristics of the hollow yarn are shown in Table 2.

Comparative Example 1

The same unsintered PTFE hollow yarn as produced in Example 1 was heated at 360°C for 10 minutes and then drawn at 25°C. However, the yarn was not made opaque, which means that the yarn was not made porous.

Comparative Example 2

The same unsintered PTFE hollow yarn as produced in Example 1 was tried to be drawn at 25°C. However, the yarn was broken during drawing and no porous PTFE hollow yarn was obtained.

Table 1

| Example No. | PTFE powder | Semi-sinter condition °C x min | Drawing conditions | | | Post-heating (°C x min.) |
|---|---|---|---|---|---|---|
| | | | Temp. (°C) | Rate (%/sec.) | Ratio (%) | |
| 1 | F-201 | 335 x 10 | 25 | 17 | 400 | --- |
| 2 | ↑ | ↑ | 290 | ↑ | ↑ | --- |
| 3 | ↑ | ↑ | 25 | 12 | 200 | --- |
| 4 | F-203 | ↑ | ↑ | ↑ | ↑ | --- |
| 5 | F-201 | ↑ | ↑ | 17 | 400 | 300 x 30 |
| 6 | ↑ | ↑ | ↑ | ↑ | ↑ | 340 x 10 |
| 7 | ↑ | ↑ | ↑ | ↑ | ↑ | 350 x 3 |
| 8 | ↑ | ↑ | ↑ | ↑ | ↑ | 350 x 10 |

Table 2

| Example No. | Sizes of hollow yarn (mm) | | | Maximum pore diameter ($\mu$m) | Porosity (%) | $N_2$ permeability (ml.cm/cm$^2$.sec.cmHg) | Tensile strength (kg/cm$^2$) | Internal pressure strength (kg/cm$^2$) |
|---|---|---|---|---|---|---|---|---|
| | Outer diameter | Inner diameter | Wall thickness | | | | | |
| 1 | 0.96 | 0.76 | 0.10 | 0.15 | 53 | $1.6 \times 10^{-4}$ | 1,000 | 1.3 |
| 2 | 0.76 | 0.61 | 0.075 | 0.22 | 31 | $1.1 \times 10^{-3}$ | 1,390 | 1.6 |
| 3 | 1.03 | 0.83 | 0.010 | 0.09 | 33 | $1.1 \times 10^{-5}$ | 860 | 5.5 |
| 4 | 1.05 | 0.95 | 0.10 | 0.25 | 32 | $4.4 \times 10^{-4}$ | 750 | 7 |
| 5 | 0.73 | 0.62 | 0.055 | 0.15 | 45 | $5.4 \times 10^{-4}$ | 850 | 1.8 |
| 6 | 0.64 | 0.51 | 0.065 | 0.15 | 30 | $1.6 \times 10^{-4}$ | 766 | >10 |
| 7 | 0.78 | 0.62 | 0.08 | 0.14 | 34 | $1.2 \times 10^{-4}$ | 739 | >10 |
| 8 | 0.78 | 0.62 | 0.08 | 0.13 | 31 | $1.2 \times 10^{-4}$ | 1,247 | >10 |

**Claims**

1. A porous polytetrafluoroethylene hollow yarn which is obtainable by heating an unsintered hollow yarn, which is produced by paste extruding polytetrafluoroethylene powder, at a temperature lower than the melting point of said polytetrafluoroethylene powder and higher than the melting point of the hollow yarn at which an endothermic peak on a higher temperature side in a crystalline melting thermograph measured with a differential scanning calorimeter does not disappear and a specific gravity of the hollow yarn is increased to 2.0 or larger and drawing the heated yarn at a temperature lower than the polytetrafluoroethylene powder.

2. The porous polytetrafluoroethylene hollow yarn according to claim 1, which has a maximum pore size of not larger than 1.0 $\mu$m and a gas permeability for nitrogen of not smaller than $1 \times 10^{-5}$ ml.cm./cm$^2$.sec.cmHg.

3. The porous polytetrafluoroethylene hollow yarn according to claim 1, wherein the polytetrafluoroethylene powder is modified polytetrafluoroethylene powder of a copolymer of tetrafluoroethylene with 2 % by weight or less of at least one copolymerizable comonomer selected from the group consisting of hexafluoropropylene, chlorotrifluoroethylene and fluoroalkyl vinyl ether.

4. The porous polytetrafluoroethylene hollow yarn according to claim 1, which has a wall thickness of not larger than 0.2 mm.

5. A process for producing a porous polytetrafluoroethylene hollow yarn which process comprising steps of:

heating an unsintered hollow yarn, which is produced by paste extruding polytetrafluoroethylene powder, at a temperature lower than the melting point of said polytetrafluoroethylene powder and higher than the melting point of the hollow yarn at which an endothermic peak on a higher temperature side in a crystalline melting thermograph measured with a differential scanning calorimeter does not disappear and a specific gravity of the hollow yarn is increased to 2.0 or larger, and

drawing the heated yarn at a temperature lower than the polytetrafluoroethylene powder.

6. The process according to claim 5, wherein the polytetrafluoroethylene powder is modified polytetrafluoroethylene powder of a copolymer of tetrafluoroethylene with 2 % by weight or less of at least one copolymerizable comonomer selected from the group consisting of hexafluoropropylene, chlorotrifluoroethylene and fluoroalkyl vinyl ether.

7. The process according to claim 5, wherein the unsintered hollow yarn is heated at a temperature of from 330 to 340 °C.

8. The process according to claim 5, which further comprises a step for post heating the drawn hollow yarn.

# FIG.1

# FIG.2

Unsintered

Temp. (°C)

# FIG.3

Semisintered

Temp. (°C)

250    300    350    400

# FIG.4

Sintered

Temp. (°C)

250    300    350    400

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 069 577 (D. CARPENTER) --- | | B 01 D 13/04 D 01 D 5/24 |
| A | US-A-4 250 138 (KOICHI OKITA) --- | | |
| A | DERWENT JAPANESE PATENTS GAZETTE, week 8408, 11th-17th January 1984, section Chemical, page 8, abstract no. 84-045182/08, Derwent Publications Ltd, London, GB; & JP-A-59 005 037 (AGENCY OF IND. SCI. TECH.) 11-01-1984 --- | | |
| A | GB-A-2 025 256 (MITSUBISHI RAYON) * Claims 5,6 * ----- | | |

TECHNICAL FIELDS
SEARCHED (Int. Cl.4)

B 01 D 13/00
B 01 D 5/00

The present search report has been drawn up for all claims

| Place of search | Date of completion of the search | Examiner |
|---|---|---|
| THE HAGUE | 09-10-1989 | DEVISME F.R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
&................................................................
& : member of the same patent family, corresponding
document

EPO FORM 1503 03.82 (P0401)